# EUROPÄISCHE PATENTANMELDUNG

(11) **EP 3 308 645 A1**
(43) Veröffentlichungstag der Anmeldung: **18.04.2018**
(21) Anmeldenummer: 17187409.2
(22) Anmeldetag: 23.08.2017
(51) Int. Cl.: A01M 27/00, A01D 51/00

(54) **VORRICHTUNG ZUM AUFNEHMEN VON TIEREN UND OBJEKTEN**

(30) Priorität: 11.10.2016 DE 202016105680 U
(71) Anmelder: Forster, Lothar, 94094 Malching (DE)
(72) Erfinder: Forster, Lothar, 94094 Malching (DE)
(74) Vertreter: Limbeck, Achim

(57) **Zusammenfassung**

Die vorliegende Erfindung betrifft eine Vorrichtung (1) zur Bekämpfen von Tieren und Objekten, umfassend eine Reihe von an einem Ende (20) eines stangenartigen Haltegriffs (2) angeordneten und im Wesentlichen in Längsrichtung des Haltegriffs (2) mindestens einen ausgerichteten, spieß- oder nadelartigen Stift (3). Die erfindungsgemäße Vorrichtung ist dadurch gekennzeichnet, dass die Stifte (3) an einem mittels einer Stange (4) in Längsrichtung des Haltegriffs (2) verschieblich betätigbaren Halter (5) angeordnet sind, wobei ein Abstreiforgan (6) vorgesehen ist, mittels dem ein oder mehrere mittels der Stifte (3) aufgespießte Tier oder Objekt durch Betätigung des Halters (5) von den Stiften (3) abgestreift werden können.

## Beschreibung

### Technisches Gebiet

Die vorliegende Erfindung betrifft eine Vorrichtung zum Aufnehmen von Tieren und Objekten, insbesondere zur Freihaltung von Schnecken auf gartenwirtschatlich genutzten Bodenflächen zur Verhinderung von Schneckenfraß. Als Objekte seien nachstehend sämtliche aufnehmbaren, gegenständliche Materialien gemeint, worunter vorzugsweise auch heruntergefallenes Fallobst zu fassen ist.

### Stand der Technik

Gemäß dem Stand der Technik sind bereits zahlreiche Verfahren und Methoden zur Entfernung von Schnecken auf biologischer, chemischer oder mechanischer Art bekannt. Im Gartenbau liegt hierbei der Schwerpunkt in erster Linie bei der Verwendung mechanischer Maßnahmen, wie bspw. Schneckenkragen, welche meist als zylindrische Hohlkörper ausgebildet sind, die über die zu schützenden Pflanzen gestülpt und ins Erdreich gesteckt werden.

Aus der Offenlegungsschrift DE 10237599 A1 ist eine zangenartige Vorrichtung zum Fangen von Schnecken, insbesondere von Schnecken ohne Gehäuse, mit zwei jeweils ein Griffteil bildenden Schenkeln bekannt, die jeweils ein erstes freies Ende sowie ein zweites Ende aufweisen, über das die Schenkel miteinander verbunden sind, wobei jeweils im Bereich des freien Endes ein Fangelement für Schnecken vorgesehen ist und die beiden Fangelemente jeweils die Hälfte einer konkaven Höhlung zur Aufnahme einer Schnecke bilden. Nachteilig bei dieser Vorrichtung ist, dass diese sehr umständlich in ihrer Bedienung ist und das Ergreifen von Schnecken mittels einer Zange mit einem hohen Zeitaufwand verbunden ist.

Darüber werden gemäß dem Stand der Technik auch teilweise herkömmliche Speere oder Nadeln zum Aufspießen von Weichtieren verwendet. Diese Speere und Nadeln sind aber nicht zum Festhalten der Weichtiere geeignet.

### Darstellung der Erfindung

Der vorliegenden Erfindung liegt die Aufgabe zu Grunde, eine Vorrichtung zu schaffen, welche die vorgenannten Probleme ausräumt und welche geeignet ist, Tiere und Objekte auf einfache, bequeme und körperschonende Art und Weise aufnehmen zu können.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Vorrichtung sind in den abhängigen Unteransprüchen angegeben.

Erfindungsgemäß ist eine Vorrichtung mit einer Reihe von an einem Ende eines stangenartigen Haltegriffs angeordneten und im Wesentlichen in Längsrichtung des Haltegriffs ausgerichteten, spieß- oder nadelartigen Stiften dadurch gekennzeichnet, dass die Stifte an einem mittels einer Stange in Längsrichtung des Haltegriffs verschieblich betätigbaren Halter angeordnet sind, wobei ein Abstreiforgan vorgesehen ist, mittels dem ein oder mehrere mittels der Stifte aufgespießte Tiere und Objekte durch Betätigung des Halters von den Stiften abgestreift werden können.

An der Stange ist zu dessen verschieblichen Betätigung vorzugsweise ein Zughebel vorgesehen, wobei es ganz besonders vorteilhaft ist, dass der Zughebel und/oder die Stange in der Weise federbelastet ist, dass die Stifte samt Stange und Halter nach dem Abstreifen des Tiers und oder Objekts wieder in ihre Ausgangsposition zurückkehren, also zur weiteren Verwendung wieder ausfahren.

Die Vorrichtung ist vorzugsweise aus korusionsbeständigem Material gefertigt. Bei einem Durchmesser des Halters von vorzugsweise ca. 60 mm, bestückt mit vorzugsweise ca. 180 Stiften (vorzugsweise Nadeln), werden die Tiere oder Objekte aufgespießt und können mit dem Zughebel an dem Abstreiforgan abgestreift werden.

Das Abstreiforgan kann als jegliches dem Tier oder Objekt als Hindernis beim Zurückziehen der Stifte entgegenstehendes Profilteil ausgebildet sein.

Durch die Stifte stirbt bspw. ein Weichtier sofort. Durch eine geeignete Haltegrifflänge ist kein Bücken mehr notwendig, um Tiere oder Objekte zu entfernen. Eine angenehme Arbeitshöhe (Haltegrifflänge beträgt dabei vorzugsweise ca. 800 mm).

Bei Betätigung des Zughebels fahren die Stifte hinter dem Abstreiforgan zurück. Die Tiere und Objekte fallen ab oder können abgestreift werden. So können bspw. Weichtiere auf der Wiese verbleiben, da sie innerhalb von 1-2 Tagen auf 10 % ihres Volumens durch die Austrocknung schrumpfen. Die bevorzugte Feder sorgt dafür, dass die Stifte wieder ausfahren.

### Kurzbeschreibung der Zeichnungen

Weitere Ziele, Merkmale, Vorteile und Anwendungsmöglichkeiten der erfindungsgemäßen Vorrichtung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

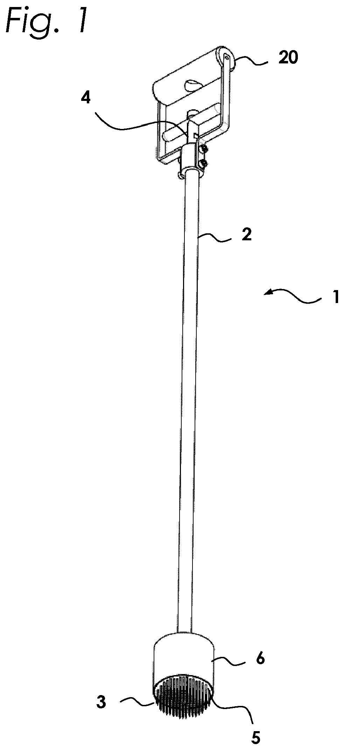

In den Zeichnungen zeigen
Fig. 1 die Vorrichtung in einer perspektivischen Ansicht;
Fign. 2a, 2b die Vorrichtung in zwei Seitenansichten;
Fig. 3 die Vorrichtung in einer Ansicht von unten.

### Ausführung der Erfindung

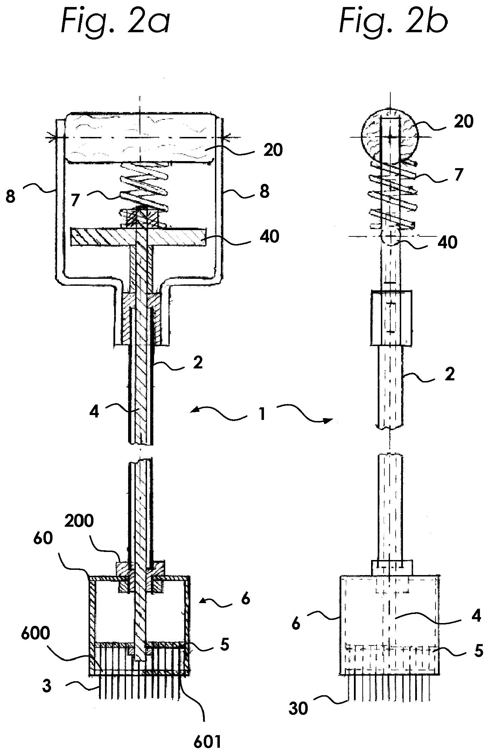

Wie aus den Fign. 2a, 2b ersichtlich, ist das Abstreiforgan 6 vorzugsweise aus einem die Stifte 3 umfassenden Gehäuse 60 gebildet, welches in Richtung der Stiftenden 30 eine Abdeckung 600 mit entsprechend der Anzahl der Stifte 3 korrespondierende Öffnungen 601 umfasst, durch welche die Stifte 3 vorzugsweise formschlüssig aus dem Gehäuse 60 ragen. Durch diese besonders bevorzugte Ausführungsform des Gehäuses 60 ist ein durch Anziehen der Stifte 3 bedingtes Abstreifen eines Tieres oder Objektes möglich. Außerdem wird durch ein formschlüssiges Austreten der Stifte 3 aus dem Gehäuse 60 verhindert, dass Verschmutzungen in das Gehäuse 60 eintreten. Selbstverständlich können die Stifte 3 an einer Öffnung an dem Gehäuse auch ohne Abdeckung hinausragen.

Der Haltegriff 2 sowie das Gehäuse 60 bestehen vorzugsweise aus korrosionsbeständigem Material. Der Haltegriff weist vorteilhafterweise eine Lanzenlänge von ca. 800mm auf. Der lange Haltegriff 2 sorgt für eine angenehme Arbeitshöhe - die komfortable Bedienung der Vorrichtung ist somit garantiert.

Das Gehäuse 60 ist unterseitig an dem Haltegriff 2 starr befestigt oder starr befestigbar angeordnet. Vorteilhaft ist das Gehäuse 60 mittels einer den Haltegriff 2 umfassenden Halterung 200 irreversibel oder reversibel angeordnet.

Die Stifte 3 sind hingegen an einem bevorzugt plattenartigen (runden, ovalen oder eckigen) Halter 5 angeordnet, welcher sich mittels der Stange 4 an dem Abstreiforgan 6 innerhalb des an dem Haltegriff 2 starr angeordneten Gehäuses 60 verschieben lässt.

Der Haltegriff 2 ist zur vorzugsweise innerverschieblichen Aufnahme der Stange 4 hohlzylindrisch ausgebildet, wobei der Haltegriff 2 einen endseitigen Handgriff 20 umfasst, mittels dem die Vorrichtung 1 betätigt wird.

Der Zughebel 40 und der Handgriff 20 sind vorteilhaft derart an dem Haltegriff 2 angeordnet und ausgebildet, dass der vorzugsweise mittels der Feder 7 federbelastete Zughebel 40 sowie der Handgriff 20 mit einer Hand betätigt werden können. Der Zughebel 40 und der Handgriff 20 sind dabei stangenartig sowie zueinander im Wesentlichen parallel ausgerichtet. Der Zughebel 40 ist vorzugsweise zum Handgriff 20 hin federbelastet, wobei vorteilhafterweise zwischen Zughebel 40 und Handgriff 20 eine Spiralfeder angeordnet ist. Dies erleichtert die Handhabung der Vorrichtung 1, zumal somit immer eine Hand frei bleibt.

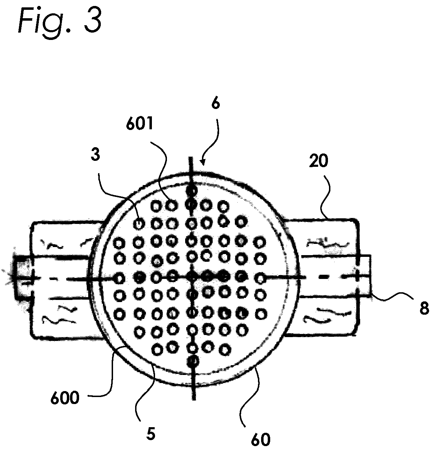

Wie die Fign. 2a, 2b und 3 zeigen, ist der Handgriff 20 vorzugsweise mittels den Zughebel 40 ebenfalls umfassenden Haltern 8 an dem Haltegriff 2 befestigt, wobei die Halter 8 mindestens eine handbreit auseinander liegen und an den beiden Enden des Handgriffs 20 angeordnet sind.

Die erfindungsgemäße Vorrichtung 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Vorrichtung
- 2: hohlzylindrischer Haltegriff
- 3: Stifte
- 4: Stange
- 5: Halter für die Stifte
- 6: Abstreiforgan
- 7: Feder
- 8: Halter
- 20: Handgriff
- 30: Stiftenden
- 40: Zughebel an der Stange
- 60: Gehäuse
- 200: Halterung an der Stange
- 600: Abdeckung des Gehäuses
- 601: Öffnungen am Gehäuse

## Patentansprüche

1. Vorrichtung (1) zur Bekämpfen von Tieren und Objekten, umfassend eine Reihe von an einem Ende (20) eines stangenartigen Haltegriffs (2) angeordneten und im Wesentlichen in Längsrichtung des Haltegriffs (2) mindestens einen ausgerichteten, spieß- oder nadelartigen Stift (3),
**dadurch gekennzeichnet, dass**
die Stifte (3) an einem mittels einer Stange (4) in Längsrichtung des Haltegriffs (2) verschieblich betätigbaren Halter (5) angeordnet sind, wobei ein Abstreiforgan (6) vorgesehen ist, mittels dem ein oder mehrere mittels der Stifte (3) aufgespießte Tier oder Objekt durch Betätigung des Halters (5) von den Stiften (3) abgestreift werden können.

2. Vorrichtung (1) nach Anspruch 1,
**dadurch gekennzeichnet, dass**
an der Stange (4) ein Zughebel (40) zu dessen verschieblichen Betätigung vorgesehen ist.

3. Vorrichtung (1) nach Anspruch 2,
**dadurch gekennzeichnet, dass**
der Zughebel (40) und/oder die Stange (4) federbelastet ist, derart, dass die Stifte (3) samt Stange (4) und Halter (5) nach dem Abstreifen des Tiers oder Objekts wieder in ihre Ausgangsposition zurückkehren.

4. Vorrichtung (1) nach Anspruch 3,
**dadurch gekennzeichnet, dass**
der Zughebel (40) zum Handgriff (20) hin federbelastet ist.

5. Vorrichtung (1) nach Anspruch 4,
**dadurch gekennzeichnet, dass**
zwischen Zughebel (40) und Handgriff (20) eine Spiralfeder angeordnet ist.

6. Vorrichtung (1) nach einem der vorangegangenen Ansprüche,
**dadurch gekennzeichnet, dass**
das Abstreiforgan (6) aus einem die Stifte (3) umfassenden Gehäuse (60) gebildet ist.

7. Vorrichtung (1) nach Anspruch 6,
**dadurch gekennzeichnet, dass**
das Gehäuse (60) in Richtung der Stiftenden eine Öffnung aufweist.

8. Vorrichtung (1) nach Anspruch 6,
**dadurch gekennzeichnet, dass**
das Abstreiforgan (6) in Richtung der Stiftenden (30) eine Abdeckung (600) mit der Anzahl der Stifte (3) entsprechend korrespondierenden Öffnungen (601) umfasst, durch welche die Stifte (3) vorzugsweise formschlüssig aus dem Gehäuse (60) ragen.

9. Vorrichtung (1) nach einem der vorangegangenen Ansprüche,
**dadurch gekennzeichnet, dass**
der Haltegriff (2) zur verschieblichen Aufnahme der Stange (4) hohlzylindrisch ausgebildet ist.

10. Vorrichtung (1) nach einem der vorangegangenen Ansprüche,
**dadurch gekennzeichnet, dass**
der Haltegriff (2) einen endseitigen Handgriff (20) umfasst.

11. Vorrichtung (1) nach einem der vorangegangenen Ansprüche,
**dadurch gekennzeichnet, dass**
der Zughebel (40) und der Handgriff (20) derart an dem Haltegriff (2) angeordnet und ausgebildet sind, dass der Zughebel (40) sowie der Handgriff (20) mit einer Hand betätigt werden können.

12. Vorrichtung (1) nach Anspruch 11,
**dadurch gekennzeichnet, dass**
der Zughebel (40) und der Handgriff (20) stangenartig sowie zueinander im Wesentlichen parallel ausgerichtet sind.

13. Vorrichtung (1) nach einem der vorangegangenen Ansprüche 6 bis 12, **dadurch gekennzeichnet, dass**
das Gehäuse (60) mittels einer den Haltegriff (2) umfassenden Halterung (200) irreversibel oder reversibel angeordnet ist.
